# EUROPÄISCHE PATENTSCHRIFT

(11) **EP 3 294 486 B1**
(45) Veröffentlichungstag und Bekanntmachung des Hinweises auf die Patenterteilung: **08.04.2020**
(21) Anmeldenummer: 16728590.7
(22) Anmeldetag: 09.05.2016
(51) Int. Cl.: B23K 26/00, B23K 26/06, B23K 26/04, B23K 26/08, B23K 26/354, B23K 26/362, B41M 5/26

(54) **VERFAHREN ZUM GRAVIEREN, MARKIEREN UND/ODER BESCHRIFTEN EINES WERKSTÜCKES MIT EINEM LASERPLOTTER UND LASERPLOTTER HIERFÜR**
METHOD FOR ENGRAVING, MARKING AND/OR INSCRIBING A WORKPIECE USING A LASER PLOTTER, AND LASER PLOTTER HEREFOR
DISPOSITIF POUR RÉALISER UNE GRAVURE, UNE MARQUE ET/OU UNE INSCRIPTION SUR UNE PIÈCE AU MOYEN D'UN TRACEUR À LASER ET TRACEUR À LASER PRÉVU À CET EFFET

(30) Priorität: 13.05.2015 AT 504022015
(43) Veröffentlichungstag der Anmeldung: 21.03.2018
(73) Patentinhaber: Trotec Laser GmbH, 4600 Wels (AT)
(72) Erfinder: LEWICKI, Gerhard, 4730 Waizenkirchen (AT)
(86) Internationale Anmeldenummer: PCT/AT2016/050132
(87) Internationale Veröffentlichungsnummer: WO 2016/179621

(56) Entgegenhaltungen:
- EP-A1- 1 577 048
- AT-A1- 512 092
- CN-U- 201 456 866
- DE-A1-102008 063 037

## Beschreibung

Die Erfindung betrifft ein Verfahren zum Gravieren, Markieren und/oder Beschriften eines Werkstücks mit einem Laserplotter und einen Laserplotter.

Aus der CN 201456866 U ist ein Verfahren und eine Vorrichtung zum Gravieren oder Markieren eines Werkstückes mit einem Laserplotter, umfassend einen Bearbeitungstisch und eine Steuerung, bekannt, wobei im Bereich der Fokussiereinheit eine Abstandsmesseinrichtung angeordnet ist und diese die ermittelten Daten zum Abstand des Werkstückes an die Steuerung weiterleitet. Aus der AT 512 092 A1 ist ein Verfahren gemäß dem Oberbegriff von Anspruch 1 bekannt.

Bei Laserplottern wird das Laserlicht mit einer Fokussierlinse scharf gebündelt. Im Fokus des Laserstrahls entsteht dabei eine extrem hohe Leistungsdichte, mit der Werkstoffe geschmolzen oder verdampft, graviert, markiert oder beschriftet werden können. Um diesen Fokus herzustellen, kamen bisher beim Laserplotter im allgemeinen Stand der Technik verschiedenste Methoden zum Einsatz:
Manuelle Fokussierung: Der höhenverstellbare Bearbeitungstisch des Laserplotters wird mittels vorzugsweise zweier Tasten gehoben oder gesenkt (Z-Achse). Die Fokusposition wird mit einem sogenannten "Fokustool" (Abstandslehre), visuell ermittelt. Jede Linsenbrennweite benötigt dabei ein eigenes Fokustool. Üblicherweise stehen mehrere Linsenbrennweiten, nämlich 38,1mm, 50,8mm, 63,5mm, 72,39mm, 81,28mm, 101,6mm und 127mm zur Verfügung. Nachteil bei einer derartigen manuellen Einstellung ist, dass diese eine sehr hohe Ungenauigkeit bei der Bedienung ermöglich, da der Nutzer manuell in der Höhe verstellt und somit oftmals nicht rechtzeitig den Bearbeitungstisch stoppt. Dadurch leidet die Qualität bei einer Gravur sehr, da der fokussierte Laserstrahl nicht optimal auf die Oberfläche des Werkstückes abgestimmt ist.

Automatische Fokussierung via Software: Hier wird im Computer ein Programm gestartet, welches den Laserplotter mit Daten versorgt. Dabei ist es jedoch erforderlich, dass der Nutzer die Dicke des Werkstücks kennen muss und diese richtig in die Software eingeben muss, so die Dicke des zu bearbeitenden Materials gespeichert werden kann. Weiters muss vom Nutzer die richtige Linse ausgewählt werden. Bei Auswahl der Funktion "automatische Software-Fokussierung" im Computer wird vor jeder Laserbearbeitung der Bearbeitungstisch (Z-Achse) in die aus Materialdicke, Linsenbrennweite und vorheriger Tisch (Z) Position errechnete Lage korrigiert. Hier besteht ein großer Nachteil, da der Nutzer Fehleingaben vornehmen kann bzw. genau wissen muss, welche Komponenten eingesetzt werden und wie dick das zu bearbeitende Werkstück ist. Die Aufgabe der Erfindung liegt darin, ein Verfahren und einen Laserplotter zu schaffen, bei dem eine möglichst einfache Fokussierung auf ein eingelegtes Werkstück möglich ist. Auch soll es möglich sein, dass das Werkstück auf jede beliebige Position im Bearbeitungsraum des Laserplotters positionierbar ist. Eine weitere Aufgabe liegt darin, die obgenannten Nachteile zu vermeiden.

Die Aufgabe der Erfindung wird durch ein Verfahren nach dem unabhängigen Anspruch 1 gelöst.

Vorteilhaft ist hierbei, dass dadurch das Werkstück auf jede beliebige Position im Bearbeitungsbereich eingelegt werden kann, wobei der Benutzer über den Laser-Pointer eine grobe Lagebestimmung vornimmt und somit anschließend eine einfache Abstandsmessung auf das eingelegte Werkstück vorgenommen werden kann. Auch ist es damit möglich, dass unebene, bombierte und stufige Werkstücke eingesetzt werde können, da der Nutzer den Fokuspunkt über den Laser-Pointer bestimmen kann. Bei der eingesetzten Abstandsmessung wird in vorteilhafter Weise erreicht, dass damit die Oberfläche des Werkstückes erfasst wird, sodass entsprechende Abstände ermittelt werden können, wobei es auch möglich ist, dass ein entsprechendes Oberflächenprofil erstell wird, welches dem Nutzer am Bildschirm angezeigt wird. Grundsätzlich ist es auch möglich, durch Kenntnis des Oberflächenverlaufes während dem Bearbeitungsvorgang den Fokus, insbesondere den Bearbeitungstisch, zu verstellen, sodass bei unterschiedlichen Werkstückhöhen immer die optimale Fokussierung gegeben ist.

Eine vorteilhafte Maßnahme liegt darin, dass bei der Verstellung des Bearbeitungstisches eine ständige Abstandsmessung durchgeführt wird. Dadurch kann der Bearbeitungstisch optimal auf die Oberfläche des Werkstückes ausgerichtet werden. Selbstverständlich ist auch möglich, dass eine Verstellung des Bearbeitungstisches ohne die Abstandsmessung durchgeführt wird, da die Position des Bearbeitungstisches vorher ermittelt wurde.

Von Vorteil ist auch eine Maßnahme, bei der nach dem Aktivieren des Bearbeitungsvorganges die Fokussiereinheit um einen definierbaren Korrekturfaktor verstellt wird, damit die Abstandsmessung an der Position des Laser-Pointers erfolgt. Dadurch wird ein einfacher Aufbau der Fokussiereinheit erreicht, da die Montage der Abstands-Messvorrichtung außerhalb des Laser-Pointers und der Laseroptik erfolgen kann, wobei jedoch die Messung des Abstandes exakt auf der Position des Laser-Pointers erfolgt. Der Nutzer braucht somit keine Korrekturen vornehmen, sodass die Bedienerfreundlichkeit erhöht wird. Dabei ist es auch möglich, dass bei einem Tausch der Fokuseinheit mit der Abstands-Messvorrichtung bei unterschiedlicher Position der Abstands-Messvorrichtung wiederum nur ein neuer Korrekturwert eingestellt werden muss.

Vorteilhaft ist eine Maßnahme, bei der die Abstandsmessung über Ultraschall erfolgt. .Dadurch kann die Oberfläche der unterschiedlichsten Materialien sicher erkannt werden. Gleichzeitig ist ein kostengünstiger Einsatz bereits bekannter Ultraschall-Abstandsmessungen aus anderen Fachgebieten möglich, da die Befestigung an der Fokussiereinheit beliebig erfolgen kann. Gleichzeitig ist es nicht erforderlich, dass der Nutzer die Position exakt einstellen kann, da über die Ultraschallmessung ein größerer Bereich abgedeckt wird und trotzdem der höchste Punkt des Werkstückes ermittelt werden kann.

Eine vorteilhafte Maßnahme liegt darin, dass während der Abstandsmessung die Fokussiereinheit des Laserplotters entsprechend einer voreinstellbaren Bewegungsbahn verstellt wird. Dadurch kann ein größerer Bereich erfasst werden, sodass die Positionierung über den Laser-Pointer nicht genau erfolgen muss. Ein weiterer Vorteil ist, dass damit geringere Höhenunterschiede, die der Benutzer ev. nicht mit freiem Auge erkennen kann, bei der Ausrichtung auf den höchsten Punkt des Werkstückes dieser ermittelt werden kann. Ist genügend Zeit vorhanden, so ist es auch möglich, dass der Nutzer nur einen Fokussierprozess startet und anschließend der gesamte Bearbeitungsbereich mit dem Ultraschall-Sensor erfasst wird, sodass keine Voreinstellung der Position notwendig ist.

Von Vorteil ist eine Maßnahme, bei der vor dem Start des Bearbeitungsprozesses der Bearbeitungstisch und die Fokussiereinheit, insbesondere der Laser-Pointer, zur Bestätigung der Position verstellt werden. Dadurch wird dem Benutzer über den Laser-Pointer die ermittelte Position angezeigt, worauf dieser die Position bestätigen oder korrigieren kann. Dabei ist es auch möglich, dass nach Ablauf einer gewissen Zeitdauer, beispielsweise von 5 sec, der Bearbeitungsvorgang ohne Bestätigung des Benutzers gestartet wird. Selbstverständlich ist es möglich, dass diese Option der ermittelten Positionsanzeige in der Software des Laserplotters deaktivierbar ist.

Eine vorteilhafte Maßnahme liegt darin, dass aufgrund der ermittelten Daten eine Lageerkennung des Werkstückes durchgeführt wird. Dadurch kann der Benutzer das Werkstück beliebig einlegen, wodurch die Bedienerfreundlichkeit wesentlich erhöht wird.

Es ist eine Maßnahme von Vorteil, bei der mehrere Parameter des Bearbeitungsprozesses mit den Daten der Abstandsmessung zum Ermitteln des Fokus kombiniert werden. Dadurch kann eine optimale Anpassung an die unterschiedlichsten Komponenten erfolgen.

Weiters wird die Aufgabe der Erfindung durch einen Laserplotter nach dem unabhängigen Anspruch 9 gelöst.

Vorteilhaft ist hierbei, dass dadurch die Einstellung des Fokus des Lasers nicht auf den Bearbeitungstisch erfolgt, sondern direkt auf die Höhe des Werkstückes ausgerichtet wird. Dadurch kann die Laserqualität wesentlich verbessert werden. Ein weiterer wesentlicher Vorteil liegt darin, dass durch das verwendete System, insbesondere eine Ultraschall-Abstandsmessung, die Positionierung nicht exakt erfolgen muss, da das Abstandsmesssystem einen größeren Bereich abdeckt, wodurch die Bedienerfreundlichkeit verbessert wird.

Von Vorteil ist eine Ausbildung, bei der die Abstandsmesseinrichtung durch einen Ultraschallsensor gebildet ist. Dadurch wird erreicht, dass bereits kostengünstige Systeme aus dem Stand der Technik eingesetzt werden können, die im Bereich der Fokussiereinheit befestigt sind.

Schließlich ist eine Ausbildung von Vorteil, bei der mehrere Abstandsmesseinrichtungen, insbesondere Ultraschallsensoren, an der Fokussiereinheit positioniert sind. Dadurch kann die Qualität der Abstandsmessung erhöht werden, da für unterschiedliche Materialien die entsprechende Abstandsmesseinheit ausgewählt werden kann.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösungen begrenzt ist.

Es zeigen:
- Fig.1: eine schematische Darstellung einer Einrichtung mit einem Laserplotter und damit verbundenen Anzeigeelement;
- Fig. 2: eine schaubildliche Darstellung der Fokussiereinheit mit der daran angeordneten Abstandsmesseinrichtung, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

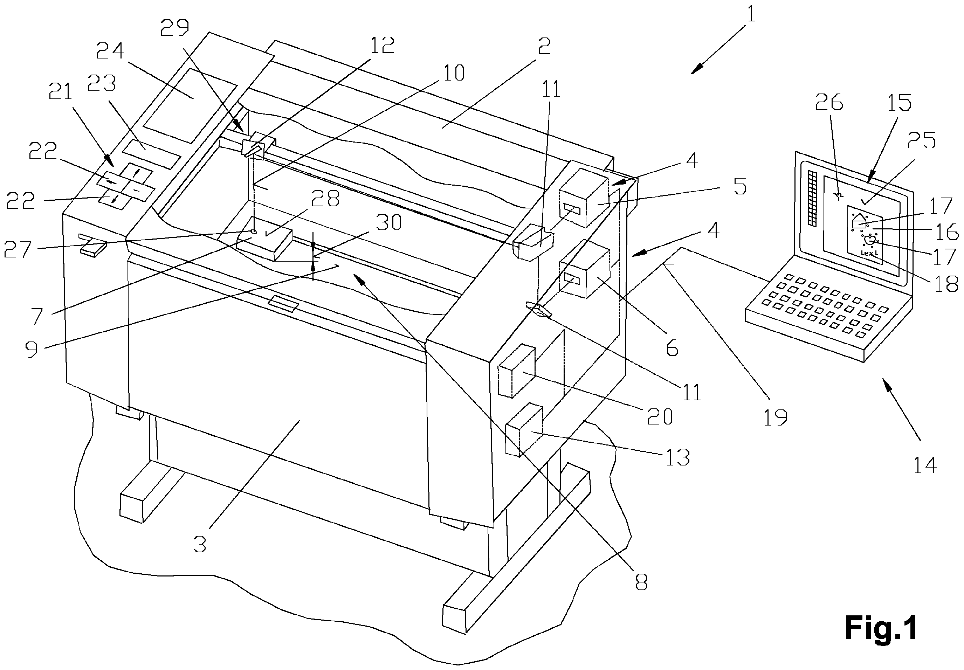

In Fig. 1 ist ein Bearbeitungsgerät 1, insbesondere ein Laserplotter 2, oder auch Lasergravierer genannt, schematisch dargestellt, bei dem in einem Gehäuse 3 zumindest eine, insbesondere zwei Strahlenquellen 4 in Form von Lasern 5, 6 angeordnet und betrieben werden. Die Laser 5 und 6 wirken vorzugsweise abwechselnd auf das zu bearbeitende Werkstück 7 ein, wobei das Werkstück 7 in einem Bearbeitungsbereich 8 des Laserplotters 2, insbesondere auf einem Bearbeitungstisch 9, positioniert ist. Ein von der Strahlenquelle 4 abgegebener Laserstrahl 10 wird über Umlenkelemente 11 an zumindest eine verfahrbare Fokussiereinheit 12 gesendet, von der der Laserstrahl 10 in Richtung Werkstück 7 abgelenkt wird und zur Bearbeitung fokussiert wird. Die Steuerung, insbesondere die Positionssteuerung des Laserstrahls 10 zum Werkstück 7 erfolgt über eine in einer Steuereinheit 13 laufende Software, wobei an einer externen Komponente 14, insbesondere an einem Anzeigeelement 15 in Form eines Computers 15 oder einem Steuergerät, ein Bearbeitungsjob 16 mit einer Grafik 17 und/oder ein Text 18, erstellt und/oder geladen wird, welcher an die Steuereinheit 13 des Laserplotters 2 über eine Datenverbindung 19 übergeben wird, die aus einer hinterlegten Datenbank 20 eine Konvertierung der übergebenen Daten, insbesondere des Bearbeitungsjobs 16 mit der Grafik 17 und/oder des Textes 18, zum Steuern der einzelnen Elemente des Laserplotters 2 vornimmt.

Weiters weist der Laserplotter 2 Eingabemittel 21, insbesondere Richtungstasten 22 zum Verfahren und Positionieren der Fokuseinheit 12 und somit des Laserstrahls 10 auf. Dabei ist es möglich, dass zusätzliche weitere Eingabetasten 21 beispielsweise in Form einer Bestätigungstaste 23 oder dergleichen vorhanden sind. Es ist auch möglich, dass am Bearbeitungsgerät 1 ein Anzeigemonitor 24 vorhanden ist, an dem beispielsweise dieselben Funktionen und Anzeigen entsprechend dem Anzeigeelemente 15 dargestellt wird. Dieser Anzeigemonitor 24 kann dabei als Touch-Monitor 24 ausgeführt sein, sodass der Benutzer durch Berührung die Steuerung bzw. Eingaben vornehmen kann bzw. dies über die Eingabemitteln 21 vornimmt.

Auf eine weitere detaillierten Beschreibung des mechanischen Aufbau eines derartigen Laserplotters 2 wird nicht mehr näher eingegangen, da dieser aus den Stand der Technik, insbesondere aus der WO 1999/038643 A der Anmelderin, bereits bekannt ist und aus dieser entnommen werden kann. Selbstverständlich ist auch ein Aufbau aus anderen aus dem Stand der Technik bekannten Laserplottern 2 möglich. Um die Benutzerfreundlichkeit zu erhöhen, ist vorgesehen, dass an dem Anzeigeelement 15 oder dem am Laserplotter 2 angeordneten Anzeigemonitor 24 ein Arbeitsbereich 25 mit einer Laserposition 26 korrespondierend zum Bearbeitungsbereich 8 des Laserplotters 2 und der Position des Laserstrahls 10 der Laser 5,6 bzw. der Fokussiereinheit 12, die durch einen üblichen Laser-Pointer 27 im Bearbeitungsbereich 8 sichtbar gemacht wird, dargestellt ist.

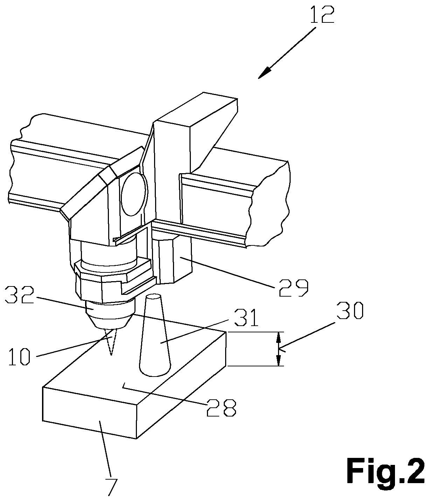

Erfindungsgemäß ist nun vorgesehen, dass die Bedienerfreundlichkeit in Bezug auf die Fokussierung des Laserplotters 2 vereinfacht wird, in dem eine sogenannte halbautomatische Einstellung des Fokus für den oder die Laser 5,6 vorgenommen wird, d.h., dass der Nutzer zuerst eine grobe Einstellung, insbesondere eine grobe Positionierung über den Laser-Pointer 27, vornehmen muss, worauf eine automatische Abstandsermittlung zur Oberfläche 28 des Werkstückes 7 erfolgt. Hierzu ist im Bereich der Fokussiereinheit 12 eine Abstandsmesseinrichtung 29 angeordnet, wobei diese zum Übersenden der ermittelten Daten, insbesondere einer Höhe 30 des eingelegten Werkstückes 7, mit der Steuereinheit 13 verbunden ist. Dadurch ist es möglich, dass nach dem Einlegen des Werkstückes 7 in dem Bearbeitungsbereich 8 der Laser-Pointer 27 des Lasers 5,6 auf oder in dem Bereich des Werkstückes 7 positioniert wird, worauf nach Aktivierung des Bearbeitungsprozesses oder eines Fokussierungsprozesses eine Abstandsmessung 31, wie schematisch in Fig. 2 angedeutet, auf die Oberfläche 28 des Werkstückes 7 durchgeführt wird und die ermittelten Daten an die Steuereinheit 13 übergeben wird, die anschließend eine Berechnung einer Position des Bearbeitungstisches 9 für den optimalen Fokuspunkt des Lasers 5,6 unter Berücksichtigung von vorgegebenen Parameter, insbesondere der verwendeten austauschbaren Laserlinse 32, durchführt und anschließend der Bearbeitungstisch 9 verstellt wird.

Hierbei ist im Laserplotter 2, insbesondere in der Speichereinheit 13, für die unterschiedlichsten einsetzbaren Laserlinse 32 ein entsprechender Parameter "Laserlinse oder Linse 1,5; Laserlinse oder Linse 2; Laserlinse oder Linse 2,5; Laserlinse oder Linse 2,85; Laserlinse oder Linse 3,2; Laserlinse oder Linse 4 und Laserlinse oder Linse 5" hinterlegt, sodass im Zusammenspiel mit den ermittelten Daten von der Abstandsmesseinrichtung 29, insbesondere der Höhe 30 des Werkstücks 7, eine entsprechende Position für den Bearbeitungstisch 9 ermittelt und eingestellt wird. Die Abstandsmesseinrichtung 29 wird dabei durch einen Ultraschallsensor gebildet, der dazu geeignet ist, dass dieser alle zu bearbeitenden Materialien bzw. Materiallegierungen oder - Materialgemische, insbesondere Glas, Alu, Stahl, Holz, Kunststoff, Stoffe, odgl., erfassen kann, die auch vom Laser 5,6 verarbeitet werden können, d.h., dass der Ultraschallsensor auf den Einsatzbereich des Lasers 5,6 abgestimmt ist.

Nachdem eine Abstandsmessung 32 durchgeführt wurde, werden die ermittelten Daten von der Abstandsmesseinrichtung 29 an die Steuereinheit 13 übergeben, die anschließend den entsprechenden Fokuspunkt berechnet. Ist dies abgeschlossen, so wird bei einem Start eines Bearbeitungsprozesses der Bearbeitungstisch 9 entsprechend verstellt. Hierbei wird vorzugsweise bei der Verstellung des Bearbeitungstisches 9 eine ständige Abstandsmessung 32 von der Abstandsmesseinrichtung 29 durchgeführt, sodass ev. Korrekturen noch vorgenommen werden kann. Dies ist insofern von Vorteil, wenn nämlich der Bearbeitungstisch 9 sehr weit zur Abstandsmesseinrichtung 29 entfernt positioniert ist und das Werkstück 7 nur eine sehr geringe Höhe 30 aufweist, so ist das Messergebnis nicht so sehr exakt, da der Messbereich vergrößert und ungenau ist. Wird jedoch anschließend der Bearbeitungstisch 9 verfahren und nähert er sich der Abstandsmesseinrichtung 29 so wird die Genauigkeit erhöht. Somit kann durch eine ständige Abstandsmessung 32 bei der Positionierung noch entsprechende Korrekturen vorgenommen werden, sodass eine optimale Einstellung des Bearbeitungstisches 9 erzielt wird.

Bei dem dargestellten Ausführungsbeispiel wird zur Erhöhung der Genauigkeit für die Abstandsmessung 32 noch eine Korrektur der Fokussiereinheit 12, insbesondere der Abstandsmesseinheit 29, vorgenommen, d.h., dass nach dem Aktivieren des Bearbeitungsvorganges oder eines Fokussiervorganges die Fokussiereinheit 12 um einen definierbaren Korrekturfaktor, der im Laserplotter 2, insbesondere in der Steuereinheit 13 hinterlegt bzw. gespeichert ist, verstellt, damit die Abstandsmessung an der Position des Laser-Pointers 27 erfolgt, sodass exakt jene Position vermessen wird, welche der Nutzer über den Laser-Pointer 27 eingestellt hat, d.h., dass der Korrekturwert dem Ausgleich der Positionen des Laser-Pointers 27 zur Abstandsmesseinrichtung 29 entspricht.

Weiters ist es auch möglich, dass während der Abstandsmessung 32 die Fokussiereinheit 12 des Laserplotters 2 entsprechend einer voreinstellbaren Bewegungsbahn verstellt wird, d.h., dass bei aktiver Abstandsmessung 32 die Fokussiereinheit 12 mit dem daran befestigten Abstandsmesseinrichtung 29 verfahren werden, sodass ein größerer Bereich für die Abstandsmessung 32 abgedeckt wird. Ein derartiges Vorgehen kann vom Nutzer in der in der Steuereinheit 13 laufenden Software aktivieren bzw. deaktivieren werden, sodass beispielsweise bei großen Werkstücken 7 dies aktiviert wird, um das gesamte Werkstücke 7, insbesondere die Oberfläche 30 des Werkstückes 7, zu ermittelten.

Darüber hinaus ist es möglich, dass aufgrund der ermittelten Daten von der Abstandsmesseinrichtung 29 oder von der Steuereinheit 13 eine Lageerkennung des Werkstückes 7 durchgeführt wird, da durch die Verwendung von Ultraschall die unterschiedlichsten Konturen des Werkstückes 7 erfasst werden und diese über die Software anschließend ausgewertet werden kann, d.h., dass von der Software festgestellt werden kann, wie das Werkstück 7 im Bearbeitungsbereich 8 eingelegt wurde, sodass der Bearbeitungsprozess entsprechen ausgerichtet werden kann.

Durch die Verwendung von Ultraschallsensoren ist es auch möglich, dass während des Bearbeitungsprozesses eine Abstandsmessung 32 durchgeführt werden kann, da der Ultraschall keinen Einfluss auf den Laserstrahl 10 hat. Ebenso beeinträchtigt der beim Bearbeitungsprozesse vom Laserstrahl 10 verursachte Rauch nicht das Messergebnis des Ultrastrahlsensors. Speziell bei großen Werkstücken 7, die viele und vorzugsweise große Höhenunterschiede aufweisen, ist es von Vorteil, wenn der Fokuspunkt während des Betriebes korrigiert wird bzw. der Bearbeitungstisch 9 während des Prozesses entsprechen verfahren wird.

Selbstverständlich ist es auch möglich, dass an der Fokussiereinheit 12 eine weitere oder mehrere Ultraschallsensoren zum Abstandsmessen 32 angeordnet sein können, wobei zu den entsprechenden Ultraschallsensoren entsprechende Korrekturwerte hinterlegt werden. Der Vorteil bei einer derartigen Lösung liegt darin, dass die verschiedenen Ultraschallsensoren für unterschiedlichsten Material verwendet werden. Dabei ist es möglich, dass in der Software das entsprechende Material ausgewählt wird, sodass anschließend der entsprechende Ultraschallsensor für die Messung aktiviert wird oder dass alle Ultraschallsensoren gleichzeitig messen und das beste Signal bzw. die besten Daten übermittelt werden.

Der Ordnung halber sei abschließend darauf hingewiesen, dass zum besseren Verständnis des Aufbaus des Systems 1 und deren Komponenten bzw. dessen Bestandteile teilweise unmaßstäblich und/oder vergrößert und/oder verkleinert dargestellt wurden.

## Patentansprüche

1. Verfahren zum Gravieren, Markieren und/oder Beschriften eines Werkstückes (7) mit einem Laserplotter (2), bei dem in einem Gehäuse (3) des Laserplotters (2) ein mittels zumindest einer Laserquelle (4) in Form eines Lasers (5,6) zu bearbeitendes Werkstück (7) eingesetzt wird, wobei das Werkstück (7) auf einem
Bearbeitungstisch (9) abgelegt wird und ein von der Strahlquelle (4) abgegebener Laserstrahl (10) über Umlenkelemente (11) an zumindest eine Fokussiereinheit (12) gesendet wird, von der der Laserstrahl (10) in Richtung Werkstück (7) abgelenkt und zur Bearbeitung fokussiert wird, wobei die Positionssteuerung des Laserstrahls (10) zum Werkstück (7) über eine in einer Steuereinheit (13) laufende Software erfolgt, sodass das Werkstück (7) Zeile für Zeile durch Verstellung eines Schlittens bearbeitet wird, wobei an einer externen Komponente (14), insbesondere einem Computer oder einem Steuergerät, eine Grafik (17) und/oder ein Text (18) erstellt wird, welche an die Steuereinheit (13) des Laserplotters (2) übergeben wird, die eine Konvertierung der übergebenen Daten, insbesondere der Grafik (17) und/oder des Textes (18), zum Steuern der einzelnen Elemente des Laserplotters (2) vornimmt, wobei während des Bearbeitungsprozesses eine Abstandsmessung im Bereich der Fokussiereinheit (12) durchgeführt wird, nach dem Einlegen des Werkstückes (7) in dem Bearbeitungsbereich (8) ein Laser-Pointer (27) des Lasers (5,6) auf oder in dem Bereich des Werkstückes (7) positioniert wird, worauf nach Aktivierung des Bearbeitungsprozesses oder eines Fokussierprozesses eine Abstandsmessung (32) auf eine Oberfläche (28) des Werkstückes (7) durchgeführt wird und die ermittelten Daten an die Steuereinheit (13) übergeben werden, die anschließend eine Berechnung einer Position des Bearbeitungstisches (9) für den optimalen Fokuspunkt des Lasers (5,6) unter Berücksichtigung von vorgegebenen Parameter durchführt, und anschließend der Bearbeitungstisch (9) verstellt wird, **dadurch gekennzeichnet, dass** zwischen den Schritten der Aktivierung des Bearbeitungsprozesses oder des Fokussierprozesses und der Abstandsmessung eine Positionskorrektur der Fokussiereinheit (12) durchgeführt wird, wobei ein hierzu verwendeter Korrekturwert einem Ausgleich der Position des Laser-Pointers (27) zur Abstandsmesseinrichtung (29) entspricht.

2. Verfahren nach Anspruch 1, **dadurch gekennzeichnet, dass** bei der Verstellung des Bearbeitungstisches (9) eine ständige Abstandsmessung (32) durchgeführt wird.

3. Verfahren nach Anspruch 1 oder 2, **dadurch gekennzeichnet, dass** nach dem Aktivieren des Bearbeitungsvorganges oder eines Fokussierprozesses die Fokussiereinheit (12) um einen definierbaren Korrekturfaktor verstellt wird, damit die Abstandsmessung (32) an der Position des Laser-Pointers (27) erfolgt.

4. Verfahren nach einem oder mehreren der vorhergehenden Ansprüche **dadurch gekennzeichnet, dass** die Abstandsmessung (32) über Ultraschall erfolgt.

5. Verfahren nach einem oder mehreren der vorhergehenden Ansprüche, **dadurch gekennzeichnet, dass** während der Abstandsmessung (32) die Fokussiereinheit (12) des Laserplotters (2) entsprechend einer voreinstellbaren Bewegungsbahn verstellt wird,

6. Verfahren nach einem oder mehreren der vorhergehenden Ansprüche, **dadurch gekennzeichnet, dass** vor dem Start des Bearbeitungsprozesses der Bearbeitungstisch (9) und die Fokussiereinheit (12), insbesondere der Laser-Pointer (27), zur Bestätigung der Position verstellt werden.

7. Verfahren nach einem oder mehrere der vorhergehenden Ansprüche, **dadurch gekennzeichnet, dass** aufgrund der ermittelten Daten eine Lageerkennung des Werkstückes (7) durchgeführt wird.

8. Verfahren nach einem oder mehrere der vorhergehenden Ansprüche, **dadurch gekennzeichnet, dass** mehrere Parameter des Bearbeitungsprozesses mit den Daten der Abstandsmessung (32) zum Ermitteln des Fokus kombiniert werden.

9. Laserplotter (2), umfassend zumindest ein Gehäuse (3) und ein mit diesem verbundenes oder integriertes Anzeigeelement (15), insbesondere einen Computer, wobei der Laserplotter (2) zumindest einen Bearbeitungsbereich (8) zum Positionieren eines Werkstückes (7), zumindest eine Strahlenquelle (4) in Form von Lasern (5,6) mit entsprechenden Umlenkelementen (11) und eine vorzugsweise verfahrbare Fokussiereinheit (12) und eine Steuereinheit (13) zum Steuern der einzelnen Elemente aufweist, und die Steuereinheit (13) zum Empfang von an einer externen Komponente, insbesondere an dem Anzeigeelement (15), erzeugten Daten, insbesondere einer Grafik (17) oder Text (18) ausgebildet ist, wobei im Bereich der Fokussiereinheit (12) eine Abstandsmesseinrichtung (29) angeordnet ist und diese zum Übersenden der ermittelten Daten, insbesondere der Höhe (30) oder des Abstands des eingelegten Werkstücks (7), mit der Steuereinheit (13) verbunden ist, **dadurch gekennzeichnet, dass** in der Steuereinheit (13) ein Positionskorrekturwert für die Abstandsmesseinrichtung (29) und für einsetzbare Laserlinsen (32) gespeichert ist, wobei der Positionskorrekturwert dem Ausgleich der Positionen des Laser-Pointers (27) zur Abstandsmesseinrichtung (29) entspricht.

10. Laserplotter (2) nach Anspruch 9, **dadurch gekennzeichnet, dass** die Abstandsmesseinrichtung (29) durch einen Ultraschallsensor gebildet ist.

11. Laserplotter (2) nach einem oder mehreren der vorhergehenden Ansprüche 9 bis 10, **dadurch gekennzeichnet, dass** mehrere Abstandsmesseinrichtungen (29), insbesondere Ultraschallsensoren, an der Fokussiereinheit (12) positioniert sind.

## Claims

1. Method for engraving, marking and/or labeling a workpiece (7) using a laser plotter (2), in which a workpiece (7) to be processed by means of at least one laser source (4) in the form of a laser (5,6) is inserted in a housing (3) of the laser plotter (2), wherein the workpiece (7) is placed on a processing table (9) and a laser beam (10) emitted by the beam source (4) is transmitted via deflecting elements (11) to at least one focusing unit (12), by which the laser beam (10) is deflected in the direction of the workpiece (7) and focused for processing, wherein the position control of the laser beam (10) in relation to the workpiece (7) is effected by means of software running in a control unit (13), so that the workpiece (7) is processed line by line by adjustment of a sliding carriage, wherein a graphic (17) and/or a text (18) is created on an external component (14), in particular a computer or a control device, which graphic and/or text is transferred to the control unit (13) of the laser plotter (2), which performs a conversion of the transferred data, in particular of the graphic (17) and/or the text (18), for controlling the individual elements of the laser plotter (2), whereby a distance measurement is carried out in the area of the focusing unit (12) during the machining process, and after insertion of the workpiece (7) in the machining area (8), a laser pointer (27) of the laser (5,6) is positioned on or in the area of the workpiece (7), whereupon, after activation of the machining process or of a focusing process, a distance measurement (32) to a surface (28) of the workpiece (7) is carried out and the data acquired thereby are transferred to the control unit (13), which then performs a calculation of a position of the machining table (9) for the optimal focal point of the laser (5,6) taking into account predetermined parameters, and the processing table (9) is then shifted, **characterized in that** between the steps of activation of the machining process or the focusing process and the distance measurement, a position correction of the focusing unit (12) is carried out, whereby a correction value used for this purpose corresponds to a compensation of the position of the laser pointer (27) relative to the distance measuring device (29).

2. Method according to claim 1, **characterized in that** a continuous distance measurement (32) is carried out during the shifting of the processing table (9).

3. Method according to claim 1 or 2, **characterized in that** after activation of the machining process or a focusing process, the focusing unit (12) is shifted by a definable correction factor so that the distance measurement (32) is performed at the position of the laser pointer (27).

4. Method according to one or several of the preceding claims, **characterized in that** the distance measurement (32) is carried out by ultrasound.

5. Method according to one or several of the preceding claims, **characterized in that** during the distance measurement (32) the focusing unit (12) of the laser plotter (2) is shifted according to a pre-selectable movement path.

6. Method according to one or several of the preceding claims, **characterized in that** before the start of the machining process the processing table (9) and the focusing unit (12), in particular the laser pointer (27), are adjusted to confirm the position.

7. Method according to one or several of the preceding claims, **characterized in that** a position detection of the workpiece (7) is carried out based on the data acquired.

8. Method according to one or several of the preceding claims, **characterized in that** a plurality of parameters of the machining process are combined with the data of the distance measurement (32) for determining the focus.

9. Laser plotter (2), comprising at least one housing (3) and one display element (15) connected thereto or integrated therein, in particular a computer, wherein the laser plotter (2) has at least one processing area (8) for positioning a workpiece (7), at least one beam source (4) in the form of lasers (5,6) with corresponding deflecting elements (11) and a preferably movable focusing unit (12) and a control unit (13) for controlling the individual elements, and the control unit (13) is designed for reception of data generated by an external component, in particular the display element (15), in particular a graphic (17) or text (18), wherein in the area of the focusing unit (12) a distance measuring device (29) is provided, and this is connected to the control unit (13) for transmission of the data acquired, in particular the height (30) or distance of the inserted workpiece (7), **characterized in that** a position correction value for the distance measuring device (29) and for insertable laser lenses (32) is stored in the control unit (13), wherein the position correction value corresponds to the compensation of the positions of the laser pointer (27) relative to the distance measuring device (29).

10. Laser plotter (2) according to claim 9, **characterized in that** the distance measuring device (29) is formed by an ultrasonic sensor.

11. Laser plotter (2) according to one or several of the preceding claims 9 to 10, **characterized in that** a plurality of distance measuring devices (29), in particular ultrasonic sensors, are provided on the focusing unit (12).

## Revendications

1. Procédé en vue de la gravure, du marquage et/ou de la personnalisation d'une pièce à traiter (7) avec un traceur laser (2), au cours duquel une pièce à traiter (7) insérée dans un boîtier (3) du traceur laser (2) est traitée au moyen d'au moins une source laser (4) sous forme d'un laser (5,6), la pièce à traiter (7) étant posée sur une table de traitement (9), et un rayon laser (10) diffusé par la source de rayonnement (4) étant envoyé, par le biais d'éléments déflecteurs (11), à au moins une unité de mise au point (12), à partir de laquelle le rayon laser (10) est dévié en direction de la pièce à traiter (7) et mis au point en vue du traitement, la position du rayon laser (10) par rapport à la pièce à traiter (7) étant contrôlée par le biais d'un logiciel exécuté sur une unité de commande (13), de manière à traiter la pièce à traiter (7), ligne par ligne, par déplacement d'un chariot, un graphique (17) et/ou un texte (18) étant créé sur un composant externe (14), notamment un ordinateur ou un appareil de commande, et transmis à l'unité de commande (13) du traceur laser (2), qui procède à une conversion des données transmises, notamment du graphique (17) et/ou du texte (18) en vue de la commande des différents éléments du traceur laser (2), une mesure de la distance étant effectuée dans la zone de l'unité de mise au point (12) au cours du processus de traitement, un pointeur laser (27) du laser (5,6) étant positionné sur ou dans la zone de la pièce à traiter (7) après l'insertion de la pièce à traiter (7) dans le processus de traitement (8), après quoi, après activation du processus de traitement ou d'un processus de mise au point, une mesure de la distance (32) est réalisée sur une surface (28) de la pièce à traiter (7) et les données obtenues sont transmises à l'unité de commande (13), qui réalise ensuite un calcul d'une position de la table de traitement (9) pour le point de focalisation optimal du laser (5,6) en tenant compte des paramètres prédéfinis puis déplace la table de traitement (9), **caractérisé en ce qu'**une correction de la position de l'unité de mise au point (12) est réalisée entre les étapes de l'activation du processus de traitement ou du processus de mise au point et de la mesure de la distance, une valeur de correction employée à cet effet correspondant à une compensation de la position du pointeur laser (27) par rapport au dispositif de mesure de distance (29).

2. Procédé selon la revendication 1, **caractérisé en ce qu'**une mesure de la distance (32) est réalisée en permanence pendant le déplacement de la table de traitement (9).

3. Procédé selon la revendication 1 ou 2, **caractérisé en ce que**, après l'activation de l'opération de traitement ou d'un processus de mise au point, l'unité de mise au point (12) est configurée avec un facteur de correction définissable afin de procéder à la mesure de la distance (32) à la position du pointeur laser (27).

4. Procédé selon une ou plusieurs des revendications précédentes, **caractérisé en ce que** la mesure de la distance (32) est réalisée au moyen d'ultrasons.

5. Procédé selon une ou plusieurs des revendications précédentes, **caractérisé en ce que** l'unité de mise au point (12) du traceur laser (2) est positionnée selon une trajectoire préconfigurable pendant la mesure de la distance (32).

6. Procédé selon une ou plusieurs des revendications précédentes, **caractérisé en ce que** la table de traitement (9) et l'unité de mise au point (12), notamment le pointeur laser (27), sont ajustées en vue de la confirmation de la position avant le démarrage du processus de traitement.

7. Procédé selon une ou plusieurs des revendications précédentes, **caractérisé en ce qu'**une reconnaissance de la position de la pièce à traiter (7) est réalisée sur la base des données obtenues.

8. Procédé selon une ou plusieurs des revendications précédentes, **caractérisé en ce que** plusieurs paramètres du processus de traitement sont combinés avec les données de la mesure de la distance (32) en vue de la détermination de la mise au point.

9. Traceur laser (2), comprenant au moins un boîtier (3) et un élément d'affichage (15) intégré ou raccordé à ce boîtier, notamment un ordinateur, le traceur laser (2) comprenant au moins une zone de traitement (8) en vue du positionnement d'une pièce à traiter (7), au moins une source de rayonnement (4) sous forme de lasers (5,6) avec des éléments déflecteurs (11) appropriés, une unité de mise au point (12) de préférence mobile et une unité de commande (13) en vue du contrôle des différents éléments, et l'unité de commande (13) est conçue en vue de la réception des données générées sur un composant externe, notamment sur l'élément d'affichage (15), notamment d'un graphique (17) ou texte (18), un dispositif de mesure de distance (29) étant disposé dans la zone de l'unité de mise au point (12) et raccordé en vue de la transmission des données obtenues, notamment de la hauteur (30) ou de la distance de la pièce à traiter (7) insérée, à l'unité de commande (13), **caractérisé en ce qu'**une valeur de correction de la position est enregistrée sur l'unité de commande (13) pour le dispositif de mesure de distance (29) et pour les lentilles laser (32) utilisables, la valeur de correction de la position correspondant à la compensation des positions du pointeur laser (27) par rapport au dispositif de mesure de distance (29).

10. Traceur laser (2) selon la revendication 9, **caractérisé en ce que** le dispositif de mesure de distance (29) est constitué d'un capteur à ultrasons.

11. Traceur laser (2) selon une ou plusieurs des revendications précédentes 9 à 10, **caractérisé en ce que** plusieurs dispositifs de mesure de distance (29), notamment des capteurs à ultrasons, sont positionnés sur l'unité de mise au point (12).
